(19) Europäisches Patentamt
European Patent Office
Office européen des brevets

(11) Veröffentlichungsnummer: **0 361 248**
**A1**

# (12) EUROPÄISCHE PATENTANMELDUNG

(21) Anmeldenummer: **89117178.7**

(22) Anmeldetag: **16.09.89**

(51) Int. Cl.5: **C02F 5/02 , C02F 5/08 , C02F 5/10 , C02F 5/14 , C02F 1/52 , C02F 1/28**

(30) Priorität: **29.09.88 DE 3832980**

(43) Veröffentlichungstag der Anmeldung:
**04.04.90 Patentblatt 90/14**

(84) Benannte Vertragsstaaten:
**BE DE ES FR GB IT NL**

(71) Anmelder: **BAYER AG**

**D-5090 Leverkusen 1 Bayerwerk(DE)**

(72) Erfinder: **Bohnsack, Gerhard, Dr.**
**Tannenweg 14**
**D-5090 Leverkusen 3(DE)**
Erfinder: **Kleinstück, Roland, Dr.**
**Am Katterbach 5**
**D-5060 Bergisch Gladbach 2(DE)**

## (54) Verfahren zur Kühlwasserbehandlung.

(57) Die vorliegende Erfindung betrifft ein Verfahren zur Behandlung von Kühlwässern, insbesondere in Wärmekraftwerken, bei dem man das dem Kühlwasserkreislauf zuzusetzende Wasser grob mechanisch reinigt, anschließend mit steininhibierenden Substanzen die Carbonathärte stabilisiert und die steininhibierenden Substanzen aus dem abfließenden Wasser wieder entfernt und gegebenenfalls aufarbeitet.

EP 0 361 248 A1

## Verfahren zu Kühlwasserbehandlung

Die vorliegende Erfindung betrifft ein Verfahren zur Kühlwasserbehandlung, insbesondere für Wärmekraftwerke.

Die in Wärmekraftwerken anfallenden großen Abwärmemengen werden üblicherweise durch Kühlen mit Wasser abgeführt. Überall dort, wo Wasser in ausreichendem Maße zur Verfügung steht, ist Durchlaufkühlung - mit bzw. ohne Ablaufkühlung - die wirtschaftlichste Form der Wasserkühlung. An Standorten aber, an denen diese Voraussetzungen nicht erfüllt ist, muß man zu Umlaufkühlsystemen und Nutzung der Verdunstungskühlung übergehen.

Für größere Kraftwerke wird Oberflächenwasser als Zusatzwasser zum offenen Kühlkreislauf verwendet. Dieses muß zunächst mechanisch grob gereinigt werden. Nach dem Stand der Technik schließt sich dann eine Entcarbonisierung an.

Bei der meist durchgeführten Kalkentcarbonisierung durch Zusatz von Kalkmilch bzw. Kalkwasser wird die Konzen tration an Calcium- und Hydrogencarbonationen im Zusatzwasser vermindert:

$$\underbrace{Ca^{2+} + 2HCO_3^-}_{\text{im Zusatzwasser}} + \underbrace{Ca^{2+} + 2OH^-}_{\text{aus Kalkmilch}} \longrightarrow 2CaCO_3\downarrow + 2H_2O$$

Ziel dieser Entcarbonisierung ist die Reduktion der Übersättigung an Calciumcarbonat, die bei Einsatz des Zusatzwassers im Kühlkreis durch Aufkonzentration und $CO_2$-Austrag im Kühlturm auftritt und zur Bildung von Calciumcarbonatablagerungen z.B. auf Wärmetauscherrohren führt. Eine ausführliche Darstellung dieser Zusammenhänge sowie der Methoden zur Entcarbonisierung ist dem Buch "Kühlwasser" von Hand-Dietrich Held, neu bearbeitet von G. Bohnsack, 3, Auflage, Vulkan-Verlag, Essen 1984, insbesonder Kapital 1, "Verfahren und Systeme der Wasserkühlung", Kapitel 2.3, "Bildung von Ablagerungen" und Kapitel 3.3, "Entcarbonisierungsverfahren", zu entnehmen.

Die Nachteile der bisher bekannten und in der Praxis ausgeübter Verfahren zur Kalkentcarbonisierung der Zusatzwässer liegen in den großen Mengen der anfallenden Schlämme an Calciumcarbonat (etwa 20 000 bis 30 000 t/a je 1000 MW Kohlekraftwerksblock), in der großen Menge an zu handhabendem Kalk und in den großen Volumina an aufzubereitendem Zusatzwasser. Dadurch sind die Investitionskosten und die Betriebskosten für die Anlagen zur Zusatzwasseraufbereitung hoch. Diese Nachteile nimmt man in Kauf, da so der Gehalt des Zusatzwassers an Calcium-und Hydrogencarbonationen auf niedrige Werte reduziert und damit die Härtestabilisierung im Kreislaufwasser einfach wird. Zum Beispiel kann durch Einsatz von Phosphonaten in Konzentrationen von <1 mg/l meist bereits eine ausreichende Steininhibierung erreicht werden.

Nach einem anderen Entcarbonisierungsverfahren wird durch Dosierung von Säure (meist Schwefelsäure, selten Salzsäure) die Carbonathärte in Nichtcarbonathärte umgewandelt:

$Ca^{2+} + 2HCO_3^- + 2H^+ + SO_4^= \rightarrow Ca^{2+} + CO_2\uparrow + 2H_2O + SO_4^=$

Die Hydrogencarbonationen werden über Kohlensäure in Kohlendioxid überführt; das Kohlendioxid wird aus dem Wasser entfernt.

Ein wesentlicher Nachteil dieses Entcarbonisierungsverfahrens ist - neben der Notwendigkeit der Handhabung großer Säuremengen -, daß gleichzeitig mit der Entfernung von Hydrogencarbonationen der Gehalt an Sulfationen (oder, bei Einsatz von Salzsäure, der Gehalt an Chloridionen) um die äquivalente Konzentration ansteigt.

Es war nun Aufgabe der vorliegenden Erfindung, ein einfacheres, weniger aufwendiges und umweltschonendes Verfahren zur Verfügung zu stellen.

Gegenstand der vorliegenden Erfindung ist ein Verfahren zur Behandlung von Kühlwässern, insbesondere in Wärmekraftwerken, ohne bzw. gegebenenfalls mit teilweise Säureentcarbonisierung des frisch zugesetzten Wassers (Zusatzwasser), das dadurch gekennzeichnet ist, daß man das dem Kühlwasserkreislauf zuzusetzende Wasser grob mechanisch reinigt, anschließend mit steininhibierenden Substanzen die Carbonathärte stabilisiert und die steininhibierenden Substanzen aus dem abfließenden Wasser (Abflut) wieder entfernt und gegebenenfalls aufarbeitet.

Nach der mechanischen Reinigung wird das Zusatzwasser ohne Entcarbonisierung dem Kühlkreis zugegeben. Die Wasserhärte wird durch Einsatz von Phosphonaten, Phosphonocarbonsäuren, Polycarbonsäuren stabilisiert. Die Abflut wird einer Aufbereitung unterzogen, um den Steininhibitor wieder zu entfernen. Mögliche Methoden zur Behandlung der Abflut sind: Flockung/Fällung mit Eisen-oder Aluminiumumsalzen, Adsorption an Ionenaustauschern.

Vorteile des erfindungsgemäßen Verfahrens gegenüber der Zusatzwasserbehandlung über Kalkentcarbonisierung sind: Die zu behandelnden Volumina sind im Vergleich zur Zusatzwasseraufbereitung erheblich geringer (bei Eindickung des Kühlwassers auf das Dreifache liegen sie bei 33 % des Zusatzwasservolumens). Das einzusetzende Fällungsmittel, z.B. Eisen(III)chloridlösung, ist gegenüber gelöschtem Kalk in der Menge sehr viel geringer und außerdem besser handhabbar. Die Menge an abgeschiedenem Feststoff liegt, im Vergleich zur Kalkentcarbonisierung, bei < 5 %.

Die Vorteile des neuen Verfahrens gegenüber der Säureentcarbonisierung sind, daß die Handhabung großer Säuremengen und die unerwünschte Erhöhung der Sulfatgehalte der Wässer ganz entfällt oder, bei Teilchencarbonisierung, stark vermindert wird.

Die Entfernung des Steininhibitors aus der Abflut kann aus der Sicht des Umweltschutzes erwünscht sein. Weiterhin kann der Steininhibitor dadurch gegebenfalls zurückgewonnen und wiederverwendet werden. Methoden zur Rückgewinnung des Steininhibitors sind: Bei Adsorption an Ionenaustauschern die Eluition mit Natronlauge/Natriumchlorid.

Steininhibitoren aus folgenden Substanzklassen können erfindungsgemäß Verfahren eingesetzt werden:

Phosphonate, wie z.B. 1-hydroxy-ethan-1,1-diphosphonsäure, Amino-tris-methylenphosphonsäure, Phosphonocarbonsäuren, wie z.B. 2-Phosphonobutan-1,2,4-tricarbonsäure (PBTC), Polycarbonsäuren, wie z.B. Polymaleinsäuren, Polyacrylsäuren.

Copolymere mit Acryl- und/oder Maleinsäureeinheiten, sowie Kombinationen von Substanzen aus einer oder aus mehreren der Substanzklassen.

Wegen der hervorragenden Wirksamkeit in an Calciumcarbonat stark übersättigten Wässern und der hohen chemischen Stabilität (auch gegenüber stark oxidierend wirkenden Bioziden wie z.B. Chlor) dürfte PBTC hier besonders geeignet sein.

Belegt werden sollen die Vorteile des neuen Verfahrens an folgenden Beispielen:

Den Berechnungen zugrunde gelegt wurden zwei Wärmekraftwerke mit je 1000 MW elektrischer Leistung, und zwar

a) ein konventioneller Kohlekraftwerksblock mit einem Wirkungsgrad von 40 % und

b) ein Kernkraftwerksblock mit einem Wirkungsgrad von 33 %.

Das zur Wärmeabfuhr über den Kühlturm zu verdunstende Wasservolumen liegt für a) bei ca. 0,04 $m^3$/sec. (= 12 mio $m^3$/a bei 350 Betriebstagen) und für b) bei ca. 0,63 $m^3$/sec (= 19 mio $m^3$/a bei 350 Betriebstagen).

Die Aufkonzentration des Zusatzwassers im Kühlsystem wird durch die Eindickungszahl EZ beschrieben.

$$EZ = 1 + \frac{Q_V}{Q_A} = \frac{Q_Z}{Q_A}, \quad Q_A + Q_V = Q_Z$$

$Q_V$ = Verdunstungsvolumen in $m^3$/Zeiteinheit

$Q_A$ = Abflut in $m^3$/Zeiteinheit

$Q_Z$ - Zusatzwasservolumen in $m^3$/Zeiteinheit

Eine EZ von ca. 3 ist üblich.

Die Zusatzstoffe werden in Mengen von 1 mg/g bis 10 mg/l Wasser zugegeben; vorzugsweise von 2 ml/l bis 5 mg/l. Alle diese Angaben beziehen sich auf Wirkstoffgehalte.

Folgende typischen Wasserqualitäten wurden für die Berechnungen angenommen:

| | | |
|---|---|---|
| Typ 1 | $Ca^{2+}$ + $Mg^{2+}$ : | 3,2 mmol/l |
| | ($Ca^{2+}$ : | 2,5 mmol/l) |
| | $K_{S\,4,3}$ : | 2,9 mmol/l |
| | $SO_4^{=}$ : | 130 mg/l |
| | $Cl^-$ : | 180 mg/l |
| Typ 2 | $Ca^{2+}$ + $Mg^{2+}$ : | 2,0 mmol/l |
| | ($Ca^{2+}$ : | 1,5 mmol/l) |
| | $K_{S\,4,3}$ : | 2,9 mmol/l |
| | $SO_4$ : | 50 mg/l |
| | $Cl^-$ : | 100 mg/l |

Bei der Kalkentcarbonisierung wird für beide Wässer 1,2 mmol/l $Ca(OH)_2$ (= 89 mg/l) benötigt und jeweils 2.4 mmol/l Calciumcarbonat (240 mg/l Feststoff) fallen aus. Die Zusammensetzungen der entcarbonisierten Wässer ist wie folgt:

| | | |
|---|---|---|
| Typ 1 | $Ca^{2+}$ : | 1,3 mmol/l |
| | $K_{S\,4,3}$ : | 0,5 mmol/l |
| Typ 2 | $Ca^{2+}$ : | 0,3 mmol/l |
| | $K_{S\,4,3}$ : | 0,5 mmol/l |

Die Sulfat- und Chloridgehalte werden durch die Kalkentcarbonisierung nicht verändert.

Die zur Steininhibierung benötigten Steininhibitorkonzentrationen wurden entsprechend der Zusammensetzung der umlaufenden Wässer grob abgeschätzt, wobei als Beispiel der Einsatz von PBTC herangezogen wurde.

Eine genauere Dosierung kann aus den Angaben von Calciumkonzentration und $K_{S\,4,3}$-Wert ohnehin nicht abgeleitet werden,d a eine erheblich größere Zahl an Faktoren wie pH-Werte, Temperaturen, Strömungsbedingungen, Verweilzeiten und viele mehr berücksichtigt werden müssen. Ebensowenig wurde ein häufig notwendiger Einsatz von anderen Kühlwasserzusatzmitteln wie z.B. Dispergiermitteln, Microbiziden, Korrosionsinhibitoren berücksichtigt.

Für eine Kühlkreislauf mit Wasser Typ 2 als Zusatzwasser und EZ = 5 wurde in Einsatz von 1 mmol/l Schwefelsäure (= 98 mg/l) zum Zuzatzwasser zur Teilenentcarbonisierung angenommen.

Für die Fällung von PBTC durch Eisenchloridlösung wurde ein Molverhältnis Fe : PBTC = 8 : 1 zugrunde gelegt.

**Wasser Typ 1**

| | Eindickungszahl | | | |
|---|---|---|---|---|
| | 2 | | 3 | |
| | Kohle-Kraftwerk | KKW | Kohle-Kraftwerk | KKW |
| I mit Kalkentcarbonisierung (Stand der Technik) | | | | |
| Zusatzwasservolumen | 24 mio $m^3$/a | 38 mio $m^3$/a | 18 mio $m^3$/a | 28,5 mio $m^3$/a |
| $Ca(OH)_2$-Bedarf | 2.100 t/a | 3.400 t/a | 1.600 t/a | 2.500 t/a |
| Anfall an $CaCO_3$-Feststoff | 5.800 t/a | 9.100 t/a | 4.300 t/a | 6.800 t/a |
| Kühlwasser, Gehalt an: | | | | |
| $Ca^{2+}$ | 2,6 mmol/l | | 3,9 mmol/l | |
| $K_{S\ 4,3}$ | 1,0 mmol/l | | 1,5 mmol/l | |
| PBTC | 0,5 mmol/l | | 1,0 mg/l | |
| Fracht PBTC | 6 t/a | 9,5 t/a | 6 t/a | 9,5 t/a |

**Wasser Typ 1** (Fortsetzung)

| | Eindickungszahl | | | |
|---|---|---|---|---|
| | 2 | | 3 | |
| | Kohle-Kraftwerk | KKW | Kohle-Kraftwerk | KKW |
| **II mit Aufbereitung der Abflut (erfindungsgemäß)** | | | | |
| Abflutvolumen Kühlwasser, | 12 mio $m^3$/a | 19 mio $m^3$/a | 6 mio $m^3$/a | 9,5 mio $m^3$/a |
| Gehalt an: | | | | |
| $Ca^{2+}$ | 5 mmol/l | | 7,5 mmol/l | |
| $K_{S\,4,3}$ | 5,8 mmol/l | | 8,7 mmol/l | |
| PBTC | 2,5 mg/l | | 5 mg/l | |
| Fracht PBTC | 30 t/a | 47,5 t/a | 30 t/a | 47,5 t/a |
| Anfall an Feststoff bei Fällung | 240 t/a | 380 t/a | 120 t/a | 190 t/a |
| Fracht PBTC bei 90 %iger Eliminierung | 3 t/a | 4,8 t/a | 3 t/a | 4,8 t/a |

**Wasser Typ 2**

| | Eindickungszahl | | | |
|---|---|---|---|---|
| | 3 | | 5 | |
| | Kohle-Kraftwerk | KKW | Kohle-Kraftwerk | KKW |
| I mit Kalkentcarbonisierung (Stand der Technik) | | | | |
| Zusatzwasservolumen | 18 mio $m^3$/a | 28,5 mio $m^3$/a | 15 mio $m^3$/a | 24 mio $m^3$/a |
| $Ca(OH)_2$-Bedarf | 1.600 t/a | 2.500 t/a | 1.300 t/a | 2.100 t/a |
| Anfall an $CaCO_3$-Feststoff | 4.300 t/a | 6.800 t/a | 3.600 t/a | 5.800 t/a |
| Kühlwasser Gehalt an: | | | | |
| $Ca^{2+}$ | 0,9 mmol/l | | 1,5 mmol/l | |
| $K_{S\ 4,3}$ | 1,5 mmol/l | | 2,5 mmol/l | |
| PBTC | 0,2 mmol/l | | 0,5 mg/l | |
| Fracht PBTC | 1,2 t/a | 1,9 t/a | 1,5 t/a | 2,5 t/a |

<u>Wasser Typ 2</u> (Fortsetzung)

| | Eindickungszahl | | | |
|---|---|---|---|---|
| | 3 | | 5 | |
| | Kohle-Kraftwerk | KKW | Kohle-Kraftwerk | KKW |
| II mit Aufbereitung der Abflut (erfindungsgemäß) | | | zusätzliche Dosierung von 1 mmol/l $H_2SO_4$ zum Zusatzwasser | |
| Abflutvolumen | 6 mio $m^3$/a | 9,5 mio $m^3$/a | 3 mio $m^3$/a | 5 mio $m^3$/a |
| Kühlwasser, Gehalt an: | | | | |
| $Ca^{2+}$ | 4,5 mmol/l | | 7,5 mmol/l | |
| $K_{S\ 4,3}$ | 8,7 mmol/l | | 9,5 mmol/l | |
| PBTC | 2,5 mg/l | | 5 mg/l | |
| Fracht PBTC | 15 t/a | 23,8 t/a | 15 t/a | 25 t/a |
| Anfall an Feststoff bei Fällung | 60 t/a | 100 t/a | 60 t/a | 100 t/a |
| Fracht PBTC bei 90 %iger Eliminierung | 1,5 t/a | 2,4 t/a | 1,5 t/a | 2,5 t/a |

## Ansprüche

1. Verfahren zur Behandlung von Kühlwässern, insbesondere in Wärmekraftwerken, ohne bzw. gegebenenfalls mit teilweiser Säureentcarbonisierung des frisch zugesetzten Wassers (Zusatzwasser), durch gekennzeichnet, daß man das dem Kühlwasserkreislauf zuzusetzende Wasser grob mechanisch reinigt, anschließend mit steininhibierenden Substanzen die Carbonathärte stabilisiert und die steininhibierenden Substanzen aus dem abfließenden Wasser (Abflut) wieder entfernt und gegebenenfalls aufarbeitet.

2. Verfahren nach Anspruch 1, dadurch gekennzeichnet, daß man als steininhibierende Substanzen Phosphonate, Phosphonocarbonsäuren und/oder Polycarbonsäuren sowie gegebenenfalls weitere Hilfsmittel einsetzt.

3. Verfahren nach einem der Ansprüche 1 oder 2, dadurch gekennzeichnet, daß man 2-Phosphonobutan-1,2,4-tricarbonsäure als steininhibierende Substanz einsetzt.

4. Verfahren nach einem der Ansprüche 1-3, dadurch gekennzeichnet, daß man die Steininhibitoren im abfließenden Wasser durch Flockung bzw. Fällung mit Eisen- und/oder Al-Verbindungen oder durch Adsorption an Ionenaustauschern entfernt.

Europäisches Patentamt

# EUROPÄISCHER RECHERCHENBERICHT

Nummer der Anmeldung

EP 89 11 7178

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 805 880 (J.B. LAWLAR)<br>* Zusammenfassung; Spalte 2, Zeilen 1-24; Spalte 5, Zeilen 26-53 *<br>--- | 1-2 | C 02 F 5/02<br>C 02 F 5/08<br>C 02 F 5/10<br>C 02 F 5/14<br>C 02 F 1/52<br>C 02 F 1/28 |
| A | FR-A-2 118 698 (BAYER)<br>* Seite 5, Zeilen 8-40 *<br>----- | 1-3 | |

| RECHERCHIERTE SACHGEBIETE (Int. Cl.5) |
|---|
| C 02 F |

Der vorliegende Recherchenbericht wurde für alle Patentansprüche erstellt

| Recherchenort | Abschlußdatum der Recherche | Prüfer |
|---|---|---|
| DEN HAAG | 29-11-1989 | VAN AKOLEYEN H.T.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)